# EUROPÄISCHE PATENTSCHRIFT

(11) **EP 2 672 808 B1**
(45) Veröffentlichungstag und Bekanntmachung des Hinweises auf die Patenterteilung: **26.07.2017**
(21) Anmeldenummer: 11704436.2
(22) Anmeldetag: 09.02.2011
(51) Int. Cl.: A01J 5/04, A01J 5/08

(54) **ANORDNUNG UMFASSEND EIN ZITZENGUMMI MIT EINEM MILCHSCHLAUCH UND EINER BELÜFTUNGSEINRICHTUNG SOWIE MELKBECHER**
ARRANGEMENT COMPRISING A MILINKG LINER WITH A MILKING TUBE AND A VENTILATING DEVICE, AND MILKING CUP
SYSTÈME COMPORTANT UN MANCHON TRAYEUR AVEC UN TUYAU À LAIT ET UN DISPOSITIF DE VENTILATION, ET UN GOBELET TRAYEUR ASSOCIÉ

(43) Veröffentlichungstag der Anmeldung: 18.12.2013
(73) Patentinhaber: GEA Farm Technologies GmbH, 59199 Bönen (DE)
(72) Erfinder: BALKENHOL, Reinhard, 33098 Paderborn (DE)
(74) Vertreter: Specht, Peter
(86) Internationale Anmeldenummer: PCT/EP2011/051873
(87) Internationale Veröffentlichungsnummer: WO 2012/107084

(56) Entgegenhaltungen:
- WO-A1-01/33947
- WO-A1-2005/110069
- US-A- 2 982 511

## Beschreibung

Die Erfindung betrifft eine Anordnung mit einem Zitzengummi und einem Milchschlauch mit einer Belüftungseinrichtung sowie einen Melkbecher.

Eine derartige Anordnung wird zum maschinellen Melken von milchgebenden Tieren verwendet.

Das Dokument WO 2008/031818 beschreibt ein Zitzengummi sowie Melkbecher mit einer Belüftungsdüse. Hinsichtlich der Problematik von maschinellem Melken und der verwendeten Werkstoffe wird vollumfänglich auf das Dokument WO 2008/031818 verwiesen.

Die Patentschrift US 6,055,931 lehrt einen Belüftungsstopfen für eine Belüftungsöffnung in einem Milchschlauch. Der Belüftungsstopfen weist eine Düsenöffnung mit einem kleinen Durchmesser und einen sich daran anschließenden Kanal mit einem größeren Durchmesser und einer relativ zum Abschnitt kleinen Durchmessers großen Länge auf. Der Belüftungsstopfen ist mit einem Hinterschnitt versehen und zum Einstecken in eine Öffnung des Milchschlauchs vorgesehen. Dabei ragt ein Abschnitt mit dem Kanal mit dem größeren Durchmesser in den Innenraum des Milchschlauchs in einen Strömungsweg hinein. Dieser Stopfen kann durch ein Tier durch Drauftreten herausgedrückt werden und der Melkvorgang wird dadurch gestört.

Vor diesem Hintergrund setzt die Erfindung bei dem Gedanken an, sich von dem einsetzbaren Stopfen abzuwenden und eine in insbesondere in Hinsicht auf Hygienegesichtspunkte verbesserte Anordnung zu schaffen.

Diese Aufgabe wird durch eine Anordnung mit den Merkmalen des Anspruchs 1 gelöst. Sie schafft zudem den Gegenstand des Anspruchs 13. Das Dokument WO 01/33947 offenbart eine Anordnung gemäss dem Oberbegriff des Anspruchs 1. Die erfindungsgemäße Anordnung umfasst ein Zitzengummi, einen mit dem Zitzengummi verbundenen Milchschlauch und eine Belüftungseinrichtung. Ein Strömungsweg zum Ableiten ermolkener Milch kommuniziert über die Belüftungseinrichtung mit der Außenatmosphäre bzw. Umgebungsatmosphäre. Die Belüftungseinrichtung weist einen Ringkörper mit einer Düsenöffnung auf, der auf dem Milchschlauch fixiert ist, wobei er den Milchschlauch umgreift und wobei die Düsenöffnung mit dem Strömungsweg in einem Schlauchinnenraum des Milchschlauchs kommuniziert. Soweit in den Ansprüchen der Begriff Zitzengummi verwendet wird, ist er nicht zu eng zu fassen. Er beschreibt den Gegenstand "Zitzengummi", der aus geeigneten elastischen Materialien, insbesondere einem Gummi oder einem Silikon oder dgl., bestehen kann.

Da der Ringkörper sicher fixiert ist, wird die Hygiene verbessert, da kein herausgetretenes Teil wie ein Stopfen versehentlich mit Keimen behaftet wieder in den Strömungsweg eingesteckt werden kann. Der Ringkörper ist auf einem geraden Abschnitt des Milchschlauchs in einer Position fixiert angeordnet. Da der Ringkörper derart besonders sicher bzw. quasi unverlierbar befestigt ist, wird auch ein möglicher Keimeintritt - wie er aufgrund eines verloren gegangenen Stopfens auftreten kann - sicher vermieden.

Der Ringkörper kann sich um den Außendurchmesser des Milchschlauchs bzw. Zitzengummis formschlüssig anschmiegen. Durch die kleine Düsenöffnung kann Luft aus der Außenatmosphäre in den Strömungsweg gelangen.

Die Belüftungseinrichtung ist an einem geraden Abschnitt des Milchschlauchs angeordnet, wodurch beim Herabhängen des Melkbechers, in dem der Zitzengummi montiert ist, keine Milch aus dem Zitzengummi und dem Milchschlauch austreten kann. Hierbei kann der Melkbecher herabhängen, entweder nachdem er durch das zu melkende Tier abgetreten wurde oder nach dem Abziehen der Melkbecher, das meistens automatisch durchgeführt wird, um das Melken zu beenden.

Da der Ringkörper fixiert und praktisch unverlierbar ist, ist die Hygiene erhöht, da kein herausgetretenes Teil versehentlich mit Keimen behaftet wieder in den Strömungsweg eingesteckt werden kann. Zudem ist ein Keimeintritt durch eine vergrößerte Öffnung aufgrund eines verloren gegangenen Stopfens nicht möglich.

Das Zitzengummi kann mit dem Milchschlauch über einen Bogenabschnitt verbunden sein, und die Position, in welcher die Belüftungseinrichtung fixiert angeordnet ist, kann stromabwärts von dem Bogenabschnitt liegen.

Die Düsenöffnung des Ringkörpers kommuniziert über einen im Milchschlauch eingeformten Durchgang mit dem Schlauchinnenraum des Milchschlauchs. Eine Durchmessergröße dieses Durchgangs kann wesentlich, zum Beispiel fünf- bis sechsmal, größer als ein Düsendurchmesser der Düsenöffnung sein. Dadurch werden Verschmutzungen und/oder Verstopfungen vermieden. Die Düsenöffnung selbst kann besonders kurz, etwa ein Drittel so stark wie die radiale Stärke des Ringkörpers sein. Der Düsenöffnungsdurchmesser kann zum Beispiel 0,5 mm betragen.

Der in den Milchschlauch eingeformte Durchgang mündet in den Schlauchinnenraum bzw. in den Strömungsweg. Dabei steht er nicht hervor und ruft keine zusätzlichen Verwirbelungen des Strömungsmediums Milch hervor. Es können sich auch keine Ablagerungen bilden, da keine Hinterschnitte von zusätzlich eingesteckten Teilen vorhanden sind. Daher ist eine Reinigung wesentlich erleichtert.

Der in den Milchschlauch eingeformte Durchgang kann sich radial durch eine Düsenerhöhung erstrecken, die von der Außenseite des Milchschlauchs hervorsteht. Dadurch kann eine genaue Positionierung des Ringkörpers erzielt werden, insbesondere wenn der Ringkörper eine Aufnahmeöffnung zur Aufnahme der von der Außenseite des Milchschlauchs hervorstehenden Düsenerhöhung aufweist, wobei die Düsenöffnung bei in der Aufnahmeöffnung aufgenommenen Düsenerhöhung mit dem Durchgang kommunizieren kann.

Der Ringkörper kann somit unverlierbar ausgebildet sein. Ein Abtreten durch ein zu melkendes oder gemolkenes Tier ist unwahrscheinlich.

Die Düsenerhöhung kann eine radial nach außen gewölbte Erhöhungsüberseite aufweisen, welche mit einer radial nach außen gewölbten Innenwandung der Aufnahmeöffnung des Ringkörpers einen dichten Sitz bilden kann.

Zur Verstärkung dieses dichten Sitzes der radial nach außen gewölbte Erhöhungsüberseite an der radial nach außen gewölbten Innenwandung der Aufnahmeöffnung des Ringkörpers kann ein Ringinnendurchmesser des Ringkörpers einen geringeren Wert aufweisen als ein Schlauchaußendurchmesser im Bereich der Position aufweist, in welcher der Ringkörper auf dem Milchschlauch fixiert angeordnet ist.

Der Ringkörper kann zudem eine Halteröffnung aufweisen, die mit einer von der Außenseite des Milchschlauchs hervorstehenden Haltererhöhung zusammenwirken kann. Auf diese Weise ist eine Unverlierbarkeit und Fixierung des Ringkörpers in der korrekten Position sichergestellt.

Die Halteröffnung des Ringkörpers kann radial der Düsenöffnung gegenüberliegen.

Das Zitzengummi, der Bogenabschnitt und der Milchschlauch können einstückig ausgebildet sein. Ein bevorzugter Werkstoff kann Silikon sein.

Ein Material des Ringkörpers kann steifer als das Material des Milchschlauchs sein. Damit ist es möglich eine Vorspannung für den dichten Sitz noch weiter zu verstärken. Das Material des Ringkörpers kann zum Beispiel aus PSU/PPSU (Polysulfon/Polyphenylsulfon) bestehen oder aufweisen.

Vorzugsweise ist der Ringkörper umfangsgeschlossen ausgebildet.

Vorteilhafte Weiterbildungen und Ausgestaltungen der Anordnung bzw. des Melkbechers sind Gegenstand der jeweiligen abhängigen Ansprüche.

Weitere Vorteile und Einzelheiten gehen aus dem in den Figuren der Zeichnung dargestellten Ausführungsbeispiel hervor. Hierbei zeigen:
- Figur 1: eine schematische perspektivische Ansicht einer erfindungsgemäßen Anordnung eines Zitzengummis mit Milchschlauch und einer Belüftungseinrichtung;
- Figur 2: eine schematische Querschnittdarstellung der Belüftungseinrichtung nach Figur 1;
- Figur 3: eine schematische Längsschnittdarstellung der Belüftungseinrichtung nach Figur 1;
- Figur 4: eine Seitenansicht der Belüftungseinrichtung nach Figur 1;
- Figur 5 und 6: schematische perspektivische Ansichten eines Ringkörpers der Belüftungseinrichtung nach Figur 1;
- Figur 7: eine schematische, radiale Querschnittansicht des Ringkörpers nach Figur 5 und 6;
- Figur 8: eine vergrößerte Darstellung des Bereichs VIII der Figur 7; und
- Figur 9 und 10: schematische Seitenansichten der Ringkörpers nach Figur 5 und 6.

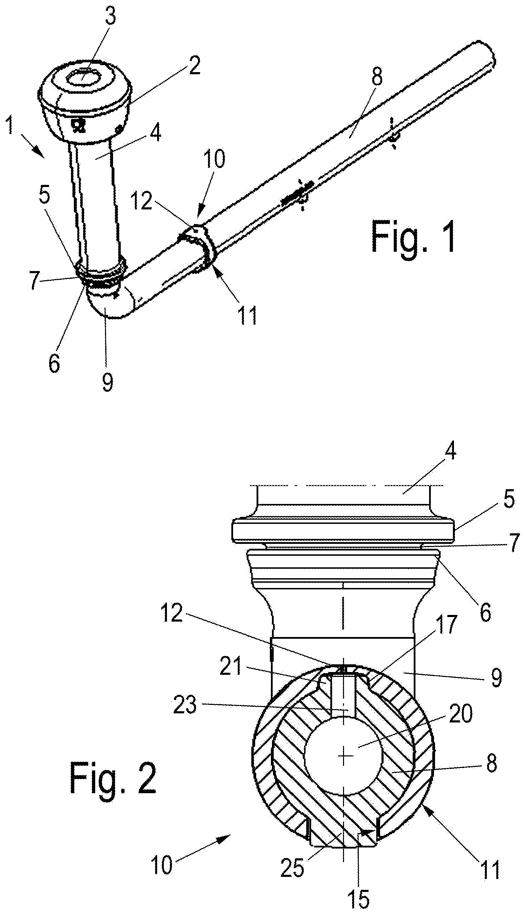

Figur 1 zeigt eine schematische perspektivische Ansicht einer erfindungsgemäßen Anordnung, umfassend ein Zitzengummi 1, einen Milchschlauch 8 und eine Belüftungseinrichtung 10.

Das Zitzengummi 1 ist mit einem Kopf 2 versehen, der eine Öffnung 3 zum Einführen einer Zitze (nicht gezeigt) besitzt. An den Kopf 2 schließt sich ein Schaft 4 an. In einem Abstand zum Kopf 2 sind an dem Schaft 4 eine erste Wulst 5 und eine zweite Wulst 6 angeordnet, die zwischen sich eine Nut 7 festlegen. Eine Melkbecherhülse und weitere Bestandteile eines Melkbechers sind nicht dargestellt, aber leicht vorstellbar. Die Melkbecherhülse, in welche das Zitzengummi 1 eingebracht wird, ist mit einer Öffnung versehen, deren Rand in die Nut 7 eingreift. Ein oberer Rand der Melkbecherhülse wird von dem Kopf 2 umfasst.

Der Schaft 4 ist unterhalb der zweiten Wulst 6 mit einem Bogenabschnitt 9 verbunden, welcher in den Milchschlauch 8 übergeht. Der Bogenabschnitt 9 weist hier mit einen Winkel von etwa 90° auf, ist aber nicht darauf beschränkt. In diesem Ausführungsbeispiel sind das Zitzengummi 1, der Bogenabschnitt 9 und der Milchschlauch 8 einstückig als ein so genannter Monoblock aus einem elastischen, lebensmittelechtem bzw. für Lebensmittel geeignet und zugelassenem Material, z.B. Silikon, ausgebildet.

Um eine Beschleunigung der Milch bei einem Melkvorgang von der Zitze auf einem Strömungsweg vom Kopf 2 durch den Schaft 4, den Bogenabschnitt 9 und den Milchschlauch 8 bis zu einem (nicht gezeigten) Milchsammelstück (am offenen Ende des Milchschlauchs 8) zu erzielen, muss Luft in das System eingebracht werden. Dazu ist stromabwärts in einem Abstand von dem Bogenabschnitt 9 auf einem geraden Abschnitt des Milchschlauchs 8 die Belüftungseinrichtung 10 angeordnet. Für eine weitere Erläuterung wird auf das Dokument WO 2008/031818 verwiesen.

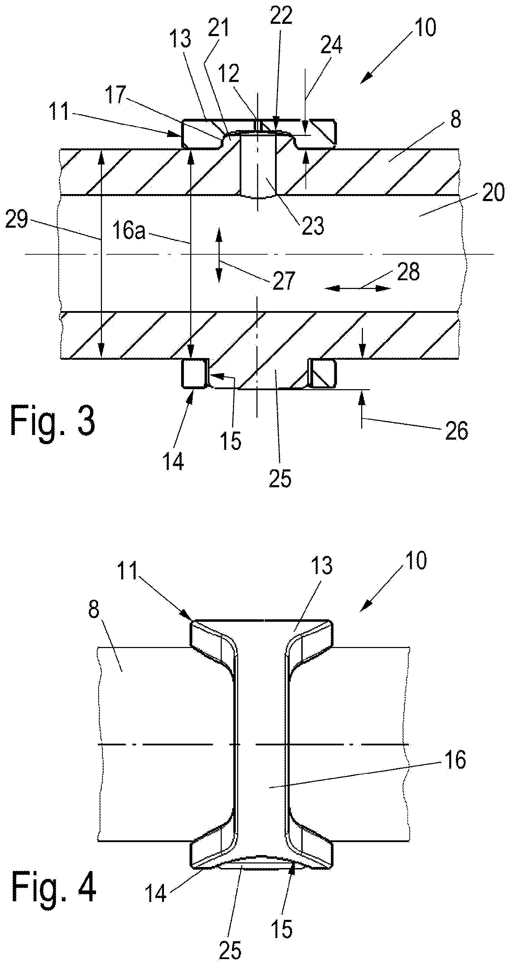

Die Belüftungseinrichtung 10 umfasst einen Ringkörper 11 mit einer Düsenöffnung 12. Der Ringkörper 11 ist auf den Milchschlauch 8 axial aufgeschoben und umgibt den Schlauch in einer bestimmten Position, in welcher der Ringkörper 11 fixiert ist. Dies ist in Figur 2 in einer schematischen Querschnittdarstellung und in Figur 3 in einer schematischen Längsschnittansicht der Belüftungseinrichtung 10 nach Figur 1 gezeigt. Figur 4 zeigt eine Seitenansicht der Belüftungseinrichtung 10.

Der Ringkörper 11 ist im Bereich der Düsenöffnung 12 mit einem Düsenabschnitt 13 versehen, welcher unterhalb der Düsenöffnung 12 eine Aufnahmeöffnung 17 aufweist, die durch die Düsenöffnung 12 mit der Außenseite des Ringkörpers 11 und auf diese Weise mit der Außenatmosphäre verbunden ist.

Der Ringkörper 11 schmiegt sich um den Schlauchaußendurchmesser 29 des Milchschlauchs 8. In der Position, in welche der Ringkörper 11 auf dem Milchschlauch 8 fixiert angeordnet ist und die Düsenöffnung 12 mit dem Strömungsweg, d.h. mit dem Schlauchinnenraum 20 des Milchschlauchs 8 kommuniziert, weist der Milchschlauch 8 eine, in diesem Ausführungsbeispiel runde, Düsenerhöhung 21 mit einem Durchgang 23 auf. Der Durchgang 23 ist in die Düsenerhöhung 21 und somit in den Milchschlauch eingeformt, wobei die Düsenerhöhung 21 mit dem Milchschlauch einstückig ausgebildet ist. Der Durchgang 23 erstreckt sich radial in einer Radialrichtung 27 zu einer Axialrichtung 28 des Milchschlauchs 8 und kommuniziert mit dem Schlauchinnenraum 20 des Milchschlauchs 8. Der Durchgang 23 mündet nach außen durch eine Erhöhungsoberseite 22 der Düsenerhöhung 21.

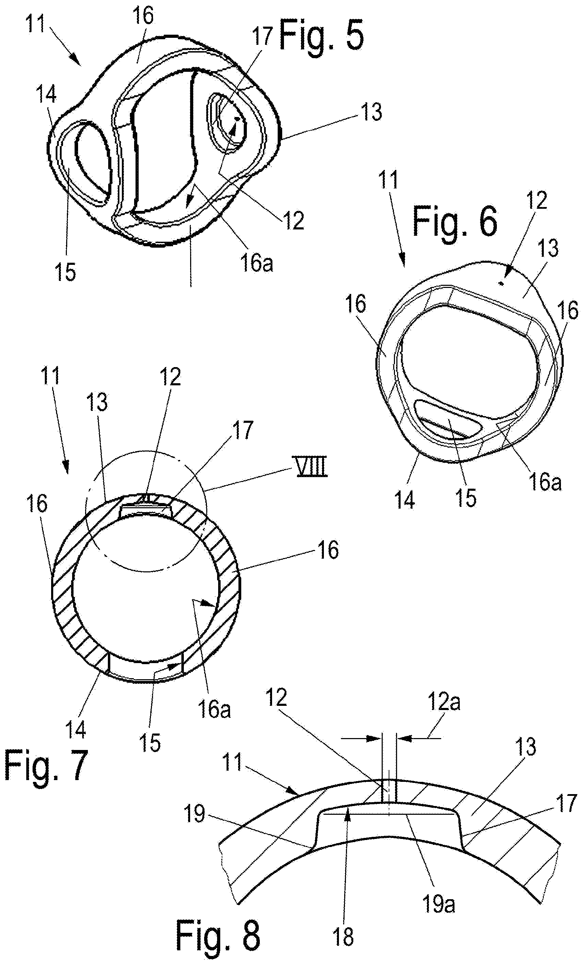

Die Düsenerhöhung 21 steht mit einem Erhöhungsmaß 24 von der Oberseite des Milchschlauchs 8 hervor und ist von der mit ihr korrespondierenden Aufnahmeöffnung 17 an der Innenseite des auf den Milchschlauch 8 aufgeschobenen Ringkörpers 11 formschlüssig aufgenommen. Dabei liegt die Erhöhungsoberseite 22 an einer Innenwandung 18 (siehe Figur 8) der Aufnahmeöffnung 17 an und bildet einen dichten Übergang zwischen dem Durchgang 23 und der Düsenöffnung 12. Auf diesem Wege kommuniziert der Schlauchinnenraum 20 mit der Außenatmosphäre.

In dieser beispiel- und vorteilhaften Ausführungsbeispiel weist der Durchgang 23 einen Durchmesser auf, der etwa fünf- bis sechsmal größer ist als der Düsendurchmesser 12a (siehe Figur 8) der Düsenöffnung 12. Der Durchmesser der Aufnahmeöffnung 17 ist annähernd doppelt so groß wie der Durchmesser des Durchgangs 23. Der Düsendurchmesser 12a beträgt in diesem Ausführungsbeispiel 0,5 mm.

Der Ringkörper 11 weist gegenüberliegend zu dem Düsenabschnitt 13 einen Halteabschnitt 14 auf. Der Düsenabschnitt 13 und der Halteabschnitt 14 sind durch gegenüberliegende Verbindungsabschnitte 16, die hier schmaler (in Axialrichtung) sind als der Düsenabschnitt 13 und der Halteabschnitt 14.

Der Halteabschnitt 14 ist mit einer von der Außenseite des Ringkörpers 11 zu einer Innenseite des Ringkörpers 11 durchgehenden Halteröffnung 15 versehen. Die Halteröffnung 15 umgreift eine Haltererhöhung 25 formschlüssig, die von der Außenseite des Milchschlauchs 8 um eine Halterhöhe 26 hervorsteht und der Düsenerhöhung 21 in diesem Beispiel radial gegenüberliegt. Es können auch mehrere jeweils korrespondierende Haltererhöhungen und Halteröffnungen vorgesehen sein (z.B. je zwei, hier nicht dargestellt).

Ein Ringinnendurchmesser 16a des Ringkörpers 11 ist etwas kleiner ausgeführt als der Schlauchaußendurchmesser 29 des Milchschlauchs 8. Dies bewirkt, dass der Ringkörper 11 im Bereich der Erhöhungen 21 und 25 diese und den Milchschlauch 8 mit einer Vorspannung umgreift, wodurch der dichte Sitz zwischen Erhöhungsoberseite 22 und Innenwandung 18 der Aufnahmeöffnung 17 gewährleistet ist.

Der Ringkörper 11 wird auf den Milchschlauch 8 in einfacher Weise axial aufgeschoben, wobei der Milchschlauch 8 dann in Axialrichtung 28 etwas auseinander gezogen wird. Dabei ergibt sich eine radiale Verkleinerung im Bereich der Erhöhungen 21 und 25, so dass der Ringkörper 11 über diese geschoben und formschlüssig in Position gebracht wird, indem der Milchschlauch 8 wieder losgelassen wird. Auf diese Weise ist der Ringkörper 11 der Belüftungseinrichtung 10 unverlierbar auf dem Milchschlauch 8 in Position festgesetzt. Eine Demontage verläuft in umgekehrter Reihenfolge.

Figur 5 und 6 zeigten schematische perspektivische Ansichten des Ringkörpers 11 der Belüftungseinrichtung 10 nach Figur 1. Figur 7 zeigt einen radialen Querschnitt des Ringkörpers 11.

Aus den Figuren 5 und 6 ist die ringförmige Gestalt des Ringkörpers 11 deutlich erkennbar. Die Halteröffnung 15 ist an der Außenseite mit einer gerundeten, umlaufenden Kante versehen, wodurch eine sichere Handhabung gewährleistete ist. Die Aufnahmeöffnung 17 weist zur Innenseite des Ringkörpers 11 ebenfalls eine gerundete, umlaufende Kante (Außenrundung 19 in Figur 8) auf. Dadurch werden Beschädigungen des Milchschlauchs 8 und der Düsenerhöhung 21 bei Montage und Demontage verhindert.

Eine radiale Wandstärke des Düsenabschnitts 13 im Bereich der Düsenöffnung 12 beträgt etwa ein Drittel der radialen Gesamtwandstärke.

Figur 8 stellt eine Vergrößerung des Bereichs VIII der Figur 7 im Bereich der Düsenöffnung 12 dar.

Die Aufnahmeöffnung 17 mündet in den Schlauchinnenraum 20 mit einer umlaufenden Außenrundung 19. Zur Düsenöffnung 12 hin geht die Aufnahmeöffnung 17 über eine umlaufende Innenrundung 19a in die Innenwandung 18 über. Die Innenwandung 18 ist radial nach außen gewölbt. Diese Wölbung korrespondiert zu einer Außenwölbung der Erhöhungsoberseite 23 der Düsenerhöhung 21. Dadurch wird ein dichter Sitz der Innenwandung 18 auf der Düsenerhöhung 21 und somit des Übergangs von Durchgang 23 zur Düsenöffnung 12 gewährleistet.

Die Düsenöffnung 12 mit dem Düsendurchmesser 12a erstreckt sich radial zur Axialrichtung 28 des Milchschlauchs 8, wenn der Ringkörper 11 in Position angeordnet ist.

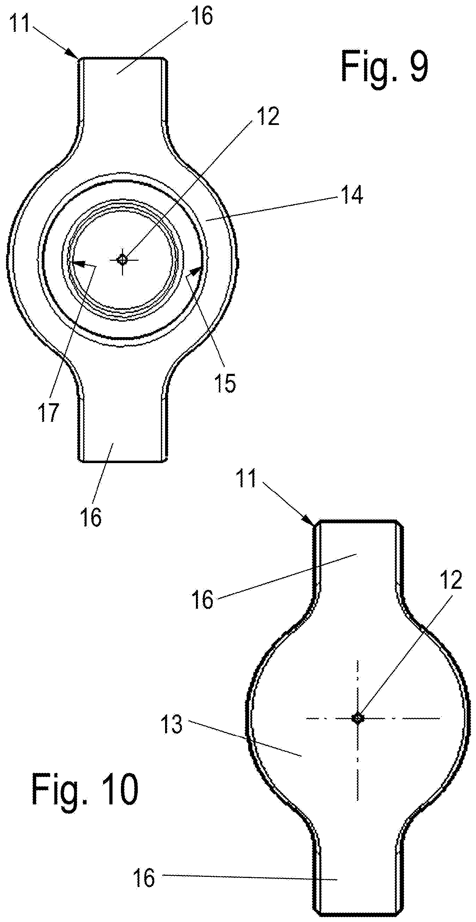

Schließlich zeigen Figuren 9 und 10 schematische Seitenansichten der Ringkörpers 11 nach Figur 5 und 6.

In Figur 9, die eine Ansicht auf den Halterabschnitt 14 ist, ist erkennbar, dass die Aufnahmeöffnung 17 und die Halteröffnung 15 koaxial angeordnet sind.

Figur 10 ist eine Ansicht auf den Düsenabschnitt 13 mit der Düsenöffnung 12. Die axiale Länge der Verbindungsabschnitte 16 beträgt in etwa die Hälfte der axialen Länge des Düsenabschnitts 13 bzw. des Halterabschnitts 14.

Der Ringkörper 11 besteht aus einem hochfesten Kunststoff, z.B. Polysulphon (PSU)/ Polyphenylsulfon (PPSU) usw., und ist fester als der Milchschlauch 8 aus Silikon.

Es ist auch denkbar, dass die Verbindungsabschnitte 16 eine größere axiale Länge aufweisen.

Am Umfang des Ringkörpers 11 können auch mehrere Düsenöffnungen 12, z.B. mit unterschiedlichen Durchmessern, eingeformt sein, und durch Verdrehen des Ringkörpers 11 entsprechend mit dem Durchgang 23 verbunden werden. Dabei kann es möglich sein, das die Haltererhöhung 25 an anderer Stelle angeordnet oder ausgelassen ist.

### Bezugszeichen

- 1: Zitzengummi
- 2: Kopf
- 3: Zitzenöffnung
- 4: Schaft
- 5: Erste Wulst
- 6: Zweite Wulst
- 7: Nut
- 8: Milchschlauch
- 9: Bogenabschnitt
- 10: Belüftungseinrichtung
- 11: Ringkörper
- 12: Düsenöffnung
- 13: Düsenabschnitt
- 14: Halteabschnitt
- 15: Halteröffnung
- 16: Verbindungsabschnitt
- 16a: Ringinnendurchmesser
- 17: Aufnahmeöffnung
- 18: Innenwandung
- 19: Außenrundung
- 19a: Innenrundung
- 20: Schlauchinnenraum
- 21: Düsenerhöhung
- 22: Erhöhungsoberseite
- 23: Durchgang
- 24: Erhöhungsmaß
- 25: Haltererhöhung
- 26: Halterhöhe
- 27: Radialrichtung
- 28: Axialrichtung
- 29: Schlauchaußendurchmesser

## Patentansprüche

1. Anordnung mit einem Zitzengummi (1), einem mit dem Zitzengummi (1) verbundenen Milchschlauch (8) und einer Belüftungseinrichtung (10), wobei die Anordnung einen Strömungsweg zum Ableiten ermolkener Milch aufweist, und wobei dieser Strömungsweg über die Belüftungseinrichtung (10) mit der Außenatmosphäre kommuniziert, wobei die Belüftungseinrichtung (10) einen Ringkörper (11) mit einer Düsenöffnung (12) aufweist, der den Milchschlauch (8) umgreift und auf diesem fixiert ist, wobei die Düsenöffnung (12) mit dem Strömungsweg in einem Schlauchinnenraum (20) des Milchschlauchs (8) kommuniziert, wobei der Ringkörper (11) auf einem geraden Abschnitt des Milchschlauchs (8) in einer Position fixiert angeordnet ist, wobei die Düsenöffnung (12) des Ringkörpers (11) über einen im Milchschlauch (8) eingeformten Durchgang (23) mit dem Schlauchinnenraum (20) des Milchschlauchs (8) kommuniziert, **dadurch gekennzeichnet, dass** sich der in den Milchschlauch (8) eingeformte Durchgang (23) radial durch eine Düsenerhöhung (21) erstreckt, die von der Außenseite des Milchschlauchs (8) hervorsteht.

2. Anordnung nach Anspruch 1, **dadurch gekennzeichnet, dass** das Zitzengummi (1) mit dem Milchschlauch (8) über einen Bogenabschnitt (9) verbunden ist, und dass die Position, in welcher die Belüftungseinrichtung (10) fixiert angeordnet ist, stromabwärts von dem Bogenabschnitt (9) liegt.

3. Anordnung nach Anspruch 1 oder 2, **dadurch gekennzeichnet, dass** der Ringkörper (11) eine Aufnahmeöffnung (17) zur Aufnahme der von der Außenseite des Milchschlauchs (8) hervorstehenden Düsenerhöhung (21) aufweist, wobei die Düsenöffnung (12) bei in der Aufnahmeöffnung (17) aufgenommenen Düsenerhöhung (21) mit dem Durchgang (23) kommuniziert.

4. Anordnung nach Anspruch 3, **dadurch gekennzeichnet, dass** die Düsenerhöhung (21) eine radial nach außen gewölbte Erhöhungsüberseite (22) aufweist, welche mit einer radial nach außen gewölbten Innenwandung (18) der Aufnahmeöffnung (17) des Ringkörpers (11) einen dichten Sitz bildet.

5. Anordnung nach Anspruch 4, **dadurch gekennzeichnet, dass** ein Ringinnendurchmesser (16a) des Ringkörpers (11) einen geringeren Wert aufweist als ein Schlauchaußendurchmesser (29) im Bereich der Position aufweist, in welcher der Ringkörper (11) auf dem Milchschlauch (8) fixiert angeordnet ist, derart, dass der dichte Sitz der radial nach außen gewölbte Erhöhungsüberseite (22) an der radial nach außen gewölbten Innenwandung (18) der Aufnahmeöffnung (17) des Ringkörpers (11) verstärkt ist.

6. Anordnung nach einem der vorhergehenden Ansprüche, **dadurch gekennzeichnet, dass** ein Durchmesser des Durchgangs (23) etwa fünf- bis sechsmal größer als ein Düsendurchmesser (12a) der Düsenöffnung (12) ist.

7. Anordnung nach einem der vorhergehenden Ansprüche, **dadurch gekennzeichnet, dass** der Ringkörper (11) wenigstens eine Halteöffnung (15) aufweist, die mit wenigstens einer von der Außenseite des Milchschlauchs (8) hervorstehenden Haltererhöhung (25) zusammenwirkt.

8. Anordnung nach Anspruch 7, **dadurch gekennzeichnet, dass** die Halteöffnung (15) des Ringkörpers (11) radial der Düsenöffnung (12) gegenüberliegt.

9. Anordnung nach einem der vorhergehenden Ansprüche, **dadurch gekennzeichnet, dass** das Zitzengummi (1) und der Milchschlauch (8) einstückig ausgebildet sind.

10. Anordnung nach einem der vorhergehenden Ansprüche, **dadurch gekennzeichnet, dass** das Zitzengummi (1) und/oder der Milchschlauch (8) aus einem elastischen Material, insbesondere Silikon, bestehen.

11. Anordnung nach einem der vorhergehenden Ansprüche, **dadurch gekennzeichnet, dass** ein Material des Ringkörpers (11) steifer als das Material des Milchschlauchs (8) ist.

12. Anordnung nach Anspruch 10, **dadurch gekennzeichnet, dass** das Material des Ringkörpers (11) ein Polysulphon (PSU)/Polyphenylsuflon (PPSU) ist.

13. Melkbecher mit einer Melkbecherhülse und einer Anordnung mit einem Zitzengummi (1), einem mit dem Zitzengummi (1) verbundenen Milchschlauch (8) und einer Belüftungseinrichtung (10), wobei die Anordnung einen Strömungsweg zum Ableiten ermolkener Milch aufweist, und wobei dieser Strömungsweg über die Belüftungseinrichtung (10) mit der Außenatmosphäre kommuniziert, **dadurch gekennzeichnet, dass** die Anordnung nach einem der vorhergehenden Ansprüche ausgebildet ist.

## Claims

1. An arrangement, comprising a teat rubber (1), a milk hose (8) connected to the teat rubber (1), and a ventilation device (10), wherein the arrangement has a flow path for discharging milked milk, and wherein said flow path communicates with the external atmosphere via the ventilation device (10), wherein the ventilation device (10) comprises an annular body (11) with a nozzle opening (12) which engages around the milk hose (8) and is fixed thereon, wherein the nozzle opening (12) communicates with the flow path in a hose interior (20) of the milk hose (8), wherein the annular body (11) is fixed in one position on a straight section of the milk hose (8), wherein the nozzle opening (12) of the annular body (11) communicates with the hose interior (20) of the milk hose (8) via a passage (23) integrally formed in the milk hose (8), **characterized in that** the passage (23) integrally formed in the milk hose (8) extends radially through a nozzle elevation (21) protruding from the outer side of the milk hose (8).

2. An arrangement according to claim 1, **characterized in that** the teat rubber (1) is connected to the milk hose (8) by means of an arc section (9), and that the position in which the ventilation device (10) is arranged in a fixed manner is disposed downstream of the arc section (9).

3. An arrangement according to claim 1 or 2, **characterized in that** the annular body (11) has a receiving opening (17) for receiving the nozzle elevation (21) protruding from the outer side of the milk hose (8), wherein the nozzle opening (12), when the nozzle elevation (21) is accommodated in the receiving opening (17), communicates with the passage (23).

4. An arrangement according to claim 3, wherein the nozzle elevation (21) has a radially outwardly curved elevation top side (22) which forms a tight fit with a radially outwardly curved inner wall (18) of the receiving opening (17) of the annular body (11).

5. An arrangement according to claim 4, **characterized in that** an annular inner diameter (16a) of the annular body (11) has a smaller value than a hose outer diameter (29) in the region of the position in which the annular body (11) is arranged fixedly on the milk hose (8), such that the tight fit of the radially outwardly curved elevation top side (22) is reinforced on the radially outwardly curved inner wall (18) of the receiving opening (17) of the annular body (11).

6. An arrangement according to one of the preceding claims, **characterized in that** a diameter of the passage (23) is approximately five to six times greater than a nozzle diameter (12a) of the nozzle opening (12).

7. An arrangement according to one of the preceding claims, **characterized in that** the annular body (11) comprises at least one holding opening (15) which cooperates with at least one holder elevation (25) projecting from the outer side of the milk hose (8).

8. An arrangement according to claim 7, **characterized in that** the holding opening (15) of the annular body (11) is radially opposite the nozzle opening (12).

9. An arrangement according to one of the preceding claims, **characterized in that** the teat rubber (1) and the milk hose (8) are integrally formed.

10. An arrangement according to one of the preceding claims, **characterized in that** the teat rubber (1) and/or the milk hose (8) consist of an elastic material, in particular silicone.

11. An arrangement according to one of the preceding claims, **characterized in that** a material of the annular body (11) is stiffer than the material of the milk hose (8).

12. An arrangement according to claim 10, **characterized in that** the material of the annular body (11) is a polysulphone (PSU)/polyphenyl sulphone (PPSU).

13. A milking cup having a milking cup sleeve and an arrangement with a teat rubber (1), a milk hose (8) connected to the teat rubber (1), and a ventilation device (10), wherein the arrangement comprises a flow path for discharging milked milk, and wherein said flow path communicates with the external atmosphere via the ventilation device (10), **characterized in that** the arrangement is formed according to one of the preceding claims.

## Revendications

1. Disposition avec un manchon trayeur (1), un tuyau de traite (8) relié au manchon trayeur (1) et un dispositif d'aération (10), laquelle disposition présente un trajet de circulation pour évacuer le lait de traite, ce trajet de circulation communiquant par le dispositif d'aération (10) avec l'atmosphère extérieure, le dispositif d'aération (10) présentant un corps annulaire (11) avec une ouverture de buse (12) qui entoure le tuyau de traite (8) et qui est fixée sur celui-ci, l'ouverture de buse (12) communiquant avec le trajet de circulation dans un espace intérieur (20) du tuyau de traite (8), le corps annulaire (11) étant fixé en position sur une section droite du tuyau de traite (8), l'ouverture de buse (12) du corps annulaire (11) communiquant par un passage (23) formé dans le tuyau de traite (8) avec l'espace intérieur (20) du tuyau de traite (8), **caractérisée en ce que** le passage (23) formé dans le tuyau de traite (8) s'étend dans le sens radial à travers un relief de buse (21) qui fait saillie sur la face extérieure du tuyau de traite (8).

2. Disposition selon la revendication 1, **caractérisée en ce que** le manchon trayeur (1) est relié au tuyau de traite (8) par une section en arc de cercle (9) et la position dans laquelle le dispositif d'aération (10) est fixé se trouve en aval de la section en arc de cercle (9).

3. Disposition selon la revendication 1 ou 2, **caractérisée en ce que** le corps annulaire (11) présente une ouverture de logement (17) pour recevoir le relief de buse (21) qui fait saillie sur la face extérieure du tuyau de traite (8), l'ouverture de buse (12) communiquant avec le passage (23) quand le relief de buse (21) est logé dans l'ouverture de logement (17).

4. Disposition selon la revendication 3, **caractérisée en ce que** le relief de buse (21) présente une face supérieure de relief (22) bombée vers l'extérieur dans le sens radial, qui forme un siège étanche avec une paroi intérieure (18) bombée vers l'extérieur dans le sens radial de l'ouverture de logement (17) du corps annulaire (11).

5. Disposition selon la revendication 4, **caractérisée en ce qu'**un diamètre intérieur d'anneau (16a) du corps annulaire (11) est plus petit qu'un diamètre extérieur du tuyau (29) au niveau de la position dans laquelle le corps annulaire (11) est fixé sur le tuyau de traite (8), de telle manière que le siège étanche de la face supérieure de relief (22) bombée vers l'extérieur dans le sens radial soit renforcée au niveau de la paroi intérieure (18) bombée vers l'extérieur dans le sens radial de l'ouverture de logement (17) du corps annulaire (11).

6. Disposition selon l'une des revendications principales, **caractérisée en ce qu'**un diamètre du passage (23) est à peu près cinq à six fois plus grand qu'un diamètre de buse (12a) de l'ouverture de buse (12).

7. Disposition selon l'une des revendications principales, **caractérisée en ce que** le corps annulaire (11) présente au moins une ouverture de maintien (15) qui coopère avec au moins un relief de maintien (25) qui fait saillie sur la face extérieure du tuyau de traite (8).

8. Disposition selon la revendication 7, **caractérisée en ce que** l'ouverture de maintien (15) du corps annulaire (11) fait face à l'ouverture de buse (12) dans le sens radial.

9. Disposition selon l'une des revendications principales, **caractérisée en ce que** le manchon trayeur (1) et le tuyau de traite (8) sont formés d'un seul tenant.

10. Disposition selon l'une des revendications principales, **caractérisée en ce que** le manchon trayeur (1) et/ou le tuyau de traite (8) se composent d'un matériau élastique, en particulier de silicone.

11. Disposition selon l'une des revendications principales, **caractérisée en ce qu'**un matériau du corps annulaire (11) est plus rigide que le matériau du tuyau de traite (8).

12. Disposition selon la revendication 10, **caractérisée en ce que** le matériau du corps annulaire (11) est une polysulfone (PSU) ou une polyphénylsufone (PPSU).

13. Gobelet trayeur avec une enveloppe de gobelet trayeur et une disposition avec un manchon trayeur (1), un tuyau de traite (8) relié au manchon trayeur (1) et un dispositif d'aération (10), laquelle disposition présente un trajet de circulation pour évacuer le lait de traite, ce trajet de circulation communiquant avec l'atmosphère par le dispositif d'aération (10), **caractérisé en ce que** la disposition est conformée selon l'une des revendications précédentes.
